# EUROPÄISCHE PATENTSCHRIFT

(11) **EP 3 259 747 B1**
(45) Veröffentlichungstag und Bekanntmachung des Hinweises auf die Patenterteilung: **22.09.2021**
(21) Anmeldenummer: 15804699.5
(22) Anmeldetag: 24.11.2015
(51) Int. Cl.: G09B 5/14, G09B 11/06, H04N 7/14

(54) **VERFAHREN UND SYSTEM ZUM INFORMATIONSAUSTAUSCH**
METHOD AND SYSTEM FOR EXCHANGING INFORMATION
PROCÉDÉ ET SYSTÈME D'ÉCHANGE D'INFORMATIONS

(30) Priorität: 18.02.2015 CH 2152015
(43) Veröffentlichungstag der Anmeldung: 27.12.2017
(73) Patentinhaber: Gök, Metin, 8046 Zürich (CH)
(72) Erfinder: Gök, Metin, 8046 Zürich (CH)
(74) Vertreter: Rentsch Partner AG
(86) Internationale Anmeldenummer: PCT/EP2015/077419
(87) Internationale Veröffentlichungsnummer: WO 2016/131507

(56) Entgegenhaltungen:
- US-A- 5 239 373
- US-A1- 2009 119 593
- HIROSHI ISHII ET AL: "ITERATIVE DESIGN OF SEAMLESS COLLABORATION MEDIA", COMMUNICATIONS OF THE ACM, ASSOCIATION FOR COMPUTING MACHINERY, INC, UNITED STATES, Bd. 37, Nr. 8, 1. August 1994 (1994-08-01) , Seiten 83-97, XP000484285, ISSN: 0001-0782
- Andrew Busch: "IPAD Document Camera Stand", , 9. Oktober 2013 (2013-10-09), XP055245616, Gefunden im Internet: URL:http://www.andrewbusch.us/home/diy-ipa d-document-camera-stand [gefunden am 2016-01-28]
- Anonymous: "Your iPad as a FREE Document Camera |", , 21. April 2013 (2013-04-21), XP055245594, Gefunden im Internet: URL:https://appsadaisy.wordpress.com/2013/ 04/21/your-ipad-as-a-free-document-camera/ [gefunden am 2016-01-28]
- Anonymous: "$10 Smartphone to digital microscope conversion!", , 15. Februar 2015 (2015-02-15), XP055245555, Gefunden im Internet: URL:https://web.archive.org/web/2015021520 4409/http://www.instructables.com/id/10-Sm artphone-to-digital-microscope-conversion/ ? [gefunden am 2016-01-28]
- Anonymous: "Cardboard iPhone 3Gs OCR (Optical Character Rcognition) Stand", , 10. Oktober 2014 (2014-10-10), XP055245597, Gefunden im Internet: URL:https://web.archive.org/web/2014101006 5007/http://www.instructables.com/id/Cardb oard-iPhone-3Gs-OCR-Optical-Charachter-Rco gn/ [gefunden am 2016-01-28]
- //cdn.Shopify.Com/s/files/1/0255/6693/t/2/ assets/humans.Txt?843: "Justand V2 | Procomputing Products", , 11. Februar 2015 (2015-02-11), XP055244230, Gefunden im Internet: URL:https://web.archive.org/web/2015021123 2024/http://ipaddocumentcamera.com/pages/j ustand-v2? [gefunden am 2016-01-25]
- None

## Beschreibung

### Technisches Gebiet

Die Erfindung betrifft ein System und ein Verfahren zum Informationsaustausch zwischen räumlich getrennten Personen oder Benutzern. Ein erfindungsgemässes System und ein erfindungsgemässes Verfahren sind beispielsweise im Fernunterricht, etwa im Rahmen der schulischen Bildung, des Studiums, der beruflichen Bildung oder Weiterbildung, bei firmeninternen Weiterbildungen vorteilhaft einsetzen oder dem allgemeinen beruflichen Informationsaustausch.

### Hintergrund, Stand der Technik

Üblicherweise werden zur Erteilung von Fernunterricht mindestens eine Kamera und ein räumlich davon getrenntes Display benötigt, wobei die Kamera am Ort des Lehrers, also z.B. in einem Hörsaal, und das Display am Ort des Schülers, beispielsweise in einem Arbeitszimmer, angeordnet sind. Damit der Lehrer den Schüler bei der Umsetzung des Gelernten beobachten kann, sind aber oftmals an beiden Orten Kameras und Displays vorgesehen.

Aus der US2012171656A1 ist beispielsweise ein mobiles Aufzeichnungssystem für die Verwendung in Unterrichtsräumen bekannt. Dieses beinhaltet einen Computer und eine damit verbundene Vorrichtung mit einer Kamera. Besagte Vorrichtung weist einen mehrgliedrigen Ständer und am oberen Ende desselben einen schwenkbaren Arm mit einer Kamera auf.

Aus der WO2009058641A1 ist ein System mit zwei Stationen bekannt, wobei jede Station eine Kamera und ein Display umfasst, wobei für beide Stationen z. B. das Display die Gestalt einer horizontal ausgerichteten Tischplatte aufweist und die Kamera in einem Abstand von oben auf das Display der jeweiligen Station gerichtet ist. Jedes Display stellt dabei das von der Kamera der jeweils anderen Station aufgenommene Bild dar. Zur Vermeidung nachteiliger optischer Rückkopplungen sind bei den Displays und den Kameras jeweils Polarisationsfilter vorgesehen. Eine diesbezüglich ähnliche Anordnung ist auch aus der US5239373 bekannt.

Die aus dem Stand der Technik bekannten Systeme sind vergleichsweise komplex und erfordern spezialisierte Hardware und Software und sind daher teuer. Ferner sind sie aufgrund ihres Gewichtes und ihrer Abmessungen nicht ohne weiteres portabel und erfordern mindestens teilweise eine dauerhaft oder zumindest längerfristige Installationen in den entsprechenden Räumen. Ein flexibler und mobiler Einsatz in einem beliebigen Raum, z. B. in einer Wohnung oder an wechselnden Orten, ist somit kaum möglich.

Es ist eine Aufgabe der vorliegenden Erfindung, Systeme und Verfahren zum Informationsaustausch bereitzustellen, welche die Nachteile des Standes der Technik zumindest teilweise reduzieren und vorteilhafter Weise vermeiden. Die Aufgabe wird in allgemeiner Form durch den Gegenstand der unabhängigen Patentansprüche gelöst. Speziell vorteilhafte Ausführungsformen sowie Varianten ergeben sich aus den abhängigen Patentansprüchen sowie der Beschreibung und den Figuren.

### Darstellung der Erfindung

Gemäss einem Aspekt wird die Aufgabe durch ein System für den Informationsaustausch, beinhaltend eine erste und eine zweite Station, gelöst. Die erste und die zweite Station weisen jeweils ein Display, eine Kamera, einen Abstandshalter und eine mit dem Display und der Kamera verbundene Kommunikationseinrichtung auf. Ein derartiges System wird nachfolgend auch als "Anordnung" bezeichnet.

Die beiden Stationen sind dazu ausgebildet, ein von der Kamera der ersten Station aufgenommenes erstes Bild mittels der Kommunikationseinrichtungen von der ersten Station an die zweite Station zu übermitteln und in einem ersten Anzeigebereich des Displays der zweiten Station anzuzeigen sowie ein von der Kamera der zweiten Station aufgenommenes zweites Bild mittels der Kommunikationseinrichtungen von der zweiten Station an die erste Station zu übermitteln und in einem ersten Anzeigebereich des Displays der ersten Station anzuzeigen.

Sowohl für die erste Station als auch für die zweite Station gilt dabei jeweils, dass der Abstandshalter zur beabstandeten Positionierung der Kamera bezüglich einer Arbeitsfläche derart ausgebildet ist, dass die Kamera die Arbeitsfläche erfasst ,und der Abstandshalter zu diesem Zweck eine Basis zur Auflage auf oder zur Befestigung an der Arbeitsfläche oder einem anderen Objekt und eine mit der Basis verbundene oder integral geformte Halterung zur Befestigung und/oder Aufnahme der Kamera aufweist. Ein offenbarungsgemässes System zum Informationsaustausch stellt auch eine Anordnung zum Informationsaustausch dar, wobei die Begriffe "System" und "Anordnung" synonym zu verstehen sind.

Ferner sind die erste und zweite Station ferner dazu ausgelegt, das von der ersten Kamera aufgenommene Bild in einem zweiten Anzeigebereich des Displays der ersten Station darzustellen und das von der Kamera der zweiten Station aufgenommene Bild in einem zweiten Anzeigebereich des Displays der zweiten Station darzustellen.

Gemäss einem weiteren Aspekt wird die Aufgabe durch ein Verfahren zum Informationsaustausch gelöst. Das Verfahren umfasst das Bereitstellen einer ersten Station und einer zweiten Station, wobei die erste und die zweite Station jeweils ein Display, eine Kamera, einen Abstandshalter und eine mit dem Display und der Kamera verbundene Kommunikationseinrichtung aufweisen. Sowohl für die erste Station als auch für die zweite Station gilt dabei jeweils, dass der Abstandshalter zur beabstandeten Positionierung der Kamera bezüglich einer Arbeitsfläche ausgebildet ist und der Abstandshalter zu diesem Zweck eine Basis zur Auflage auf oder zur Befestigung an der Arbeitsfläche oder einem anderen Objekt und eine mit der Basis verbundene oder integral geformte Halterung zur Befestigung und/oder Aufnahme der Kamera aufweist, wobei die Kamera die Arbeitsfläche erfasst. Dass die Kamera die Arbeitsfläche erfasst, bedeutet, dass die Kamera ein Bild der Arbeitsfläche und/oder des Objektes, welches sich auf der Arbeitsfläche befindet, aufnimmt (soweit sich nicht im Raum zwischen Kamera und Arbeitsfläche weitere Objekte befinden, wie weiter unten beschrieben). Insbesondere kann die Arbeitsfläche eine (hintere) Begrenzung eines Arbeitsraumes darstellen, in welchem von einem Benutzer Manipulationen durchgeführt werden, wie weiter unten beschrieben.

Das Verfahren umfasst ferner das Aufnehmen eines ersten Bildes durch die Kamera der ersten Station sowie ein Übermitteln des ersten Bildes an die zweite Station und ein Anzeigen des ersten Bildes in einem ersten Anzeigebereich des Displays der zweiten Station. Das Verfahren umfasst ferner das Aufnehmen eines zweiten Bildes durch die Kamera der zweiten Station sowie Übermitteln des zweiten Bildes an die erste Station und Anzeigen des zweiten Bildes in einem ersten Anzeigebereich des Displays der ersten Station.

Ferner umfasst das Verfahren ferner ein Anzeigen des ersten Bildes in einem zweiten Anzeigebereich des Displays der ersten Station und ein Anzeigen des zweiten Bildes in einem zweiten Anzeigebereich des Displays der zweiten Station.

Offenbarungsgemässe Verfahren können insbesondere mittels offenbarungsgemässer Systeme ausgeführt werden. Somit definieren offenbarte beispielhafte Ausführungsformen von Systemen zugleich entsprechende Ausführungsformen des Verfahrens und umgekehrt.

Gemäss einem weiteren Aspekt betrifft die Erfindung die Verwendung eines offenbarungsgemässen Systems und/oder eines offenbarungsgemässen Verfahrens zum Fernunterricht.

Im diesem Dokument soll unter dem Begriff "Benutzer" ein Benutzer des Systems bzw. einer Station des Systems verstanden werden, unabhängig von seiner Rolle bei der Durchführung des Verfahrens, sofern nicht auf eine spezielle Rolle, z. B. als Lehrer oder Schüler, hingewiesen wird.

Bei der Bezeichnung von Ausrichtungen, Lagen und Orientierungen werden die Begriffe "horizontal" sowie "vertikal" bzw. "senkrecht" hinsichtlich des Displays mit Bezug auf die Ausrichtung des Displays bezüglich der Gravitationsachse (Senkrechte) verwendet. Entsprechend ist eine horizontale Ausrichtung des Displays einem liegenden Display und eine vertikale Ausrichtung oder senkrechte Ausrichtung des Displays einem stehenden Display. Die optische Achse des Displays ist senkrecht zur Display-Ebene. Mit Bezug auf die Ausrichtung der Kamera werden die Begriffe "horizontal" sowie "vertikal" bzw. "senkrecht" mit Bezug auf die optische Achse der Kamera bezüglich der Gravitationsachse verwendet.

Ferner beziehen sich Angaben zu einer Station oder zu Teilen einer Station - soweit nichts anderes angegeben ist - auf die erste Station und/oder auf die zweite Station. Werden mehrere Teile einer Station erwähnt, handelt es sich vorzugsweise um Teile derselben Station.

Die erste Station und die zweite Station sind im Betrieb typischerweise räumlich getrennt, beispielsweise in verschiedenen Räumen und oder Gebäuden angeordnet.

Die Stationen können jeweils vollständig als spezialisierte Vorrichtungen mit entsprechenden elektronischen bzw. computerisierten und mechanischen Elementen konstruiert sein. Sie können jedoch auch ganz oder teilweise auf üblichen kommerziellen Geräten und Komponenten, z. B. Tablet-Computern, Smartphones, Laptops, oder vergleichbaren tragbaren Computern, aber auch z. B. auf Workstations oder Desktop-Computern etc. mit entsprechendem Zubehör basieren. In diese Geräte kann das Display und/oder die Kamera optional unmittelbar integriert sein. In typischen Ausführungsformen umfassen die Stationen je eine Computereinrichtung mit einem oder mehreren Controllern und/oder Prozessoren und einer entsprechenden Programmierung. In einer beispielhaften Ausführungsform sind das Display und die Kamera als Teile desselben tragbaren Gerätes oder Computers ausgebildet.

Ein offenbarungsgemässes System ist im Vergleich zu Anordnungen des Standes der Technik vergleichsweise mobil und kann kostengünstig realisiert werden. Insbesondere kommt es aufgrund der Halterung in einigen Ausführungsformen ohne externe Stative, Wand- oder Deckenhalterungen etc aus. Damit sind die Stationen eines erfindungsgemässen Systems in praktisch beliebigen Räumen und in praktisch beliebiger Umgebung einsetzbar.

Durch den funktionell gleichartigen Aufbau der ersten und der zweiten Station mit jeweils einem Display und einer Kamera eignen sich ein offenbarungsgemässes System und ein offenbarungsgemässes Verfahren insbesondere für interaktive Arbeiten, bei denen zum Beispiel ein Benutzer der ersten Station als Lehrer eine Aufgabe durchführt. Ein Benutzer der zweiten Station kann die Durchführung der Aufgabe als Schüler am Display der zweiten Station mitverfolgen und die jeweils einzelnen Schritte praktisch zeitgleich durchführen oder nachvollziehen, was wiederum der Lehrer an der ersten Station unmittelbar überwachen und gegebenenfalls korrigierend sowie mit Hinweisen eingreifen kann. Dabei können sich die Rolle von Lehrer und Schüler in grundsätzlich beliebiger Weise mischen oder tauschen. Klassische in einer üblichen häuslichen Umgebung eingesetzte Anordnungen für den Fernunterricht sind dagegen wesentlich für einen einseitigen "Frontalunterricht" von Lehrer zu Schüler ausgelegt, während eine Bild/Videoübertragung von Schüler zu Lehrer, wenn überhaupt vorgesehen, lediglich der Verbesserung des unmittelbaren Kontakts dient.

Der grundsätzlich gleichartige Aufbau der ersten und zweiten Station bezieht sich vor allem auf die im Kontext der vorliegenden Erfindung wesentliche Funktionalität. Dagegen können die einzelnen Elemente, wie zum Beispiel die Halterung, das Display, und die Kamera in beiden Stationen gleich oder auch unterschiedlich gestaltet sein.

Ein offenbarungsgemässes System (und ein entsprechendes offenbarungsgemässes Verfahren) sind insbesondere für die betriebliche und schulische Ausbildung geeignet. Es kann etwa bei der Montage eines Produktes eingesetzt werden, um beispielsweise Arbeitsschritte zu erklären und zeitgleich mit der Hand zu zeigen, wie diese auszuführen sind (beispielsweise wie man etwas klebt und in welcher Reihenfolge usw.). Gleichzeitig kann der Ausbilder kontrollieren, ob der Lernende die Arbeitsschritte richtig ausführt und er kann ihm Anweisungen geben. Das System ist ebenfalls einsetzbar für Home-Office-Anwendungen, im Kundendienst, im Hobby- und Freizeitbereich, bei kleineren Operationen an menschlichen und tierischen Körpern, etc.

Neben der Nutzung durch einen Lehrer (bzw. Tutor, Professor, Ausbilder etc.) und einem Schüler (bzw. Student, Lernenden, etc) kann die Nutzung aufgrund der zuvor erläuterten funktionellen Symmetrie auch durch gleichberechtigte Benutzer erfolgen, beispielsweise Mitarbeiter eines Unternehmens an verschiedenen Standorten, in verschiedenen Gebäuden etc.

Der Informationsaustausch über eine offenbarungsgemässe Anordnung kann also auch zwischen Schülern, Studenten, Auszubildenden oder zwischen Mitarbeitern stattfinden. Dabei können diese sowohl die Rolle des Lehrenden als auch diejenige des Lernenden übernehmen, d.h. sich Sachverhalte gegenseitig erklären. Wenn ein Schüler also z.B. vor einer Prüfung bemerkt, dass er einen Punkt nicht verstanden hat, kann er einen oder mehrere Schulkollegen kontaktieren. Statt E-Mails mit Kopien, Photos etc. auszutauschen, was sehr zeitaufwendig ist, kann die Gruppe von Schülern mittels des Systems schnell und effektiv ihre Gedanken austauschen. Auch eine Hausaufgabe kann so von Schülern von zu Hause aus gemeinsam gelöst werden.

Im Gegensatz zu bekannten Vorrichtungen für Videokonferenzen, bei welchen insbesondere die Bildübertragung wesentlich der Übermittlung der Bilder der beteiligten Personen (gegebenenfalls inklusive Mimik, Gestik) an den oder die anderen Standorte dient und ansonsten allenfalls - beispielsweise mittels spezieller Dokumentenkamera, Touchscreen etc. - z. B. geschriebene, gezeichnete oder gedruckte Informationen ausgetauscht werden können, ist eine offenbarungsgemässe Anordnung insbesondere für manuelle Arbeiten, z. B. an einem Demonstrationsobjekt, eingerichtet.

Die Kamera der ersten und/oder zweiten Station kann jeweils ein Aufnahmeobjektiv mit Festbrennweite oder - vorteilhaft zur Darstellung verschieden grosser Objekte - ein Aufnahmeobjektiv variabler Brennweite (Zoomobjektiv) aufweisen, sowie jeweils fokussierbar oder für einen festen Aufnahmeabstand bzw. Abstandsbereich ausgelegt sein. Bei Bedarf kann ein zusätzlicher optischer Konverter oder Adapter, z. B. ein Weitwinkel- oder auch ein Telekonverter oder ein Konverter mit variabler Brennweite (Zoom-Konverter) vorgesehen sein, welcher die Brennweite des Kameraobjektivs in Abhängigkeit der jeweiligen Aufgabe bzw. der Grösse der Arbeitsfläche verändert.

Die (bevorzugt zumindest im Wesentlichen ebene) Arbeitsfläche kann horizontal ausgerichtet sein. Sie muss aber nicht unbedingt exakt horizontal ausgerichtet sein, sondern kann zum Beispiel aus ergonomischen Gründen auch pultartig geneigt sein. Die Arbeitsfläche sollte jedoch (in Abhängigkeit des Kontextes und der konkreten Anwendung) soweit horizontal sein, dass Arbeiten wie Schreiben oder Zeichnen, und gegebenenfalls Montage- oder Einstellarbeiten etc. gut durchgeführt werden können. Ferner ist die Arbeitsfläche bevorzugt soweit horizontal und so gestaltet, dass auf ihr abgelegte Gegenstände liegen bleiben und nicht aufgrund der Schwerkraft herunterfallen. Diese Überlegungen und Richtlinien für die Arbeitsfläche gelten grundsätzlich unabhängig von der Ausgestaltung des Abstandshalters. Vorteilhaft ist ferner die optische Achse der Kamera zur Arbeitsfläche orthogonal oder leicht aus der orthogonalen geneigt.

Die Halterung kann einteilig oder mehrteilig gestaltet sein. Bei einem mehrteiligen Aufbau können verschiedene Teile der Halterung zueinander starr oder in einem oder mehreren Freiheitsgraden beweglich sein.

Im Betriebszustand bildet der Abstandshalter und in einer Ausführungsformen die Station als Ganze in einer Ausführungsform eine strukturell zusammenhängende Einheit dar, welche durch einen Benutzer als ganzes bewegbar beziehungsweise positionierbar ist. Die Station und insbesondere der Abstandshalter kann jedoch zusammenklappbar oder zusammenfaltbar und/oder zur Aufbewahrung/zum Transport zerlegbar sein. Der Abstandshalter ist in einigen Ausführungsformen leichter als 10, 5, 1 oder 0.3 kg ausgebildet.

In einer Ausführungsform ist sowohl das Display als auch die Kamera an der Halterung gehalten und/oder sie liegen auf der Halterung auf. In einer derartigen Ausführungsform werden durch den Abstandshalter sowohl das Display als auch die Kamera von der Arbeitsfläche beabstandet gehalten.

Erfindungsgemäss ist bei der ersten und/oder zweiten Station das Display und die Kamera gemeinsam vom Abstandshalter entfernbar ausgebildet.

Gemäss einer weiteren Ausführungsform kann das Display und/oder die Kamera in den Halter integriert bzw. eingebaut sein.

In weiteren Ausführungsformen ist der Abstandshalter zwei- oder mehrteilig ausgeführt und umfasst einen Display-Abstandshalter und einen vom Display-Abstandshalter strukturell separaten Kamera-Abstandshalter, wobei der Display-Abstandshalter und der Kamera-Abstandshalter zur separaten Auflage auf oder Befestigung an der Arbeitsfläche vorgesehen sind. Entsprechend weist dann der Display-Abstandshalter einen Display-Halter und separat der Kamera-Abstandshalter einen Kamera-Halter auf. Ferner kann das Display mit dem Display-Halter und/oder die Kamera mit dem Kamera-Halter eine Baueinheit bilden. In weiteren Ausführungsformen sind der Abstandshalter und die Halterung lediglich zur Befestigung und/oder Aufnahme der Kamera ausgelegt, während das Display hiervon separat ist.

Erfindungsgemäss ist bei der ersten und/oder zweiten Station das Display und die Kamera fest und/oder unlösbar miteinander verbunden. Optional kann dasselbe zusätzlich für ein optionales Mikrofon und/oder einen optionalen Lautsprecher gelten.

Es kann vorgesehen sein, dass der Abstand zwischen dem Display und der Kamera unveränderlich ist. Alternativ kann jedoch auch ein einstellbarer oder veränderlicher Abstand vorgesehen sein.

In einer Ausführungsform mit zueinander beweglichen Teilen sind die Kamera und das Display relativ zueinander beweglich ausrichtbar, insbesondere relativ zueinander schwenkbar, drehbar oder kippbar angeordnet. Alternativ kann die Abstandshalter und insbesondere die Halterung jedoch im Betriebszustand im Wesentlichen starr sein. In einigen Ausführungsformen ist die Abstandshalter ferner zum Betrieb und/oder zur Aufbewahrung zerlegbar.

Die Basis des Abstandshalters kann zum Beispiel aus einem - aus Gründen der mechanischen Stabilität bevorzugt relativ schweren - Standfuß zur Platzierung zum Beispiel auf einer Tischplatte als Arbeitsfläche realisiert sein. Sie umfasst dabei zum Beispiel einer oder mehreren Säulen, welche die Funktion von Tischbeinen erfüllen, die auf der Arbeitsfläche platziert werden. In weiteren Ausführungsformen umfasst oder besteht die Basis ein Befestigungsmittel, beispielsweise eine Klemmvorrichtung und/oder einen Magnethalter.

In einer Ausführungsform ist der Abstand von der Arbeitsfläche bis Augenhöhe des Benutzers nach individuellem Seh- bzw. Arbeitskomfort sowie ggf. in Abhängigkeit der jeweils ausgeführten Arbeit stufenlos oder in Stufen ausgewählt, eingestellt oder variiert werden. Die Augenhöhe variiert von Person zu Person. Entsprechend kann der Abstand z.B. zwischen einer Handbreite und einer Armlänge betragen kann. Ein vorteilhafter Wert für den Abstand ist 10 bis 100 cm.

In einer Ausführungsform ist die Halterung zweiteilig aufgebaut, wobei ein erster Teil der Halterung das Display aufnimmt oder das Display am ersten Teil der Halterung befestigt ist, während ein zweiter Teil der Halterung die Kamera aufnimmt bzw. die Kamera am zweiten Teil der Halterung befestigt ist. Der erste bzw. zweite Teil der Halterung sind dabei jeweils separat fest oder beweglich mit der Basis verbunden.

In einer weitern Ausführungsform ist nur der das Display tragende oder aufnehmende erste Teil der Halterung unmittelbar starr oder beweglich mit der Basis verbunden oder mit dieser integral realisiert, während der zweite Teil der Halterung, welcher die Kamera trägt oder aufnimmt, starr oder beweglich am ersten Teil der Halterung befestigt ist. In derartigen Ausführungsformen ist der erste Teil der Halterung z. B. ein Rahmen, in welchem das Display z. B. geklemmt, durch Gummibänder, Schrauben oder dergleichen lösbar fixiert oder alternativ fest montiert, während der zweite Teil der Halterung an diesem Rahmen befestigt ist.

In einer weiteren Ausführungsform besteht keine funktionelle und/oder strukturelle Trennung zwischen dem ersten Teil und dem zweiten Teil der Halterung.

In einer Ausführungsform ist der Abstandshalter ein Tisch, wobei die Halterung eine Tischplatte des Tisches ist und die Tischplatte eine Öffnung oder einen transparenten Bereich aufweist, wobei die Öffnung oder der transparente Bereich grösser als der Durchmesser einer Kameralinse der Kamera ist, so dass ein von der Kamera aufgenommenes Bild durch die Ränder der Öffnung oder des transparenten Bereichs nicht oder zumindest nicht wesentlich beschnitten wird. Im Betrieb wird der Abstandshalter dabei auf einer Arbeitsfläche, die zum Beispiel durch einen weiteren Tisch, etwa einen Schreibtisch, gebildet wird platziert. Alternativ zu einem Tisch kann aber auch eine andere - typischerweise zumindest annähernd horizontale - Fläche als Arbeitsfläche dienen, beispielsweise ein Fussboden. Bei einer derartigen Ausführungsform wird die Basis durch die Tischbeine des Abstandshalters gebildet, während die Tischplatte als Halterung dient.

Ein als Tisch gestalteter Abstandshalter kann 1, 2, 3, 4 oder mehr Beine aufweisen. Der Abstand zwischen benachbarten Beinen des Tisches kann verschieden gewählt werden. Ein maximaler Abstand zwischen zwei Beinen des Tisches kann vorteilhaft mindestens 20, 30, 40, oder 50 und/oder höchstens 120, 100 oder 90 Zentimeter betragen. Bei einer derartigen Ausführungsform stellt der Bereich zwischen der Platte und der Arbeitsfläche, auf welchem der Tisch positioniert wird, den Arbeitsraum dar, in welchem Demonstrationsobjekte in zuvor beschriebener Weise positioniert und manipuliert werden. Für eine Höhenverstellung können alternativ einsetzbare Tischbeine verschiedner Länge und/oder in ihrer Länge z. B. teleskopartig verstellbare Tischbeine vorgesehen werden.

Nach einer Variante kann der Abstandshalter auch (vorzugsweise im Schnitt) im Wesentlichen Z-förmig oder U-förmig ausgebildet sein und/oder im Wesentlichen die Form eines Zylinders mit Z-förmiger oder U-förmiger Grundfläche aufweisen.

Es kann zweckmässig sein, wenn der Abstandshalter 3 oder mehr (z.B. im Wesentlichen plattenförmige oder stabförmige) Glieder aufweist, welche gelenkig oder starr miteinander verbunden sind. Vorzugsweise ist ein Winkel zwischen zwei miteinander verbundenen Gliedern veränderbar und/oder fixierbar oder unveränderbar. Ein endständiges Glied kann dann z.B. unter einen Bücherstapel geschoben werden, um den Abstandshalter in seiner Position zu fixieren. Das andere endständige Glied kann dann die Halterung bilden, wobei die endständigen Glieder über eines oder mehrere weitere Glieder verbunden sind. Alternativ kann ein endständiges Glied, z.B. wenn es die Form einer Platte aufweist, auf einer Arbeitsfläche aufliegend angeordnet werden, während das andere endständige Glied oberhalb des ersten endständigen Glieds positioniert und mit diesem über eines oder mehrere weitere Glieder verbunden ist. Dann kann z.B. ein Buch oder ein anderes Demonstrationsobjekt auf das auf der Arbeitsfläche aufliegende Glied gelegt werden, welches dann optional mit dem Abstandshalter transportiert werden kann, wenn z.B. ein Benutzer den Raum wechseln muss.

Unabhängig von der Ausgestaltungsform des Abstandshalters ist es von Vorteil, wenn die Halterung in einem Abstand von der Basis (und/ oder der Arbeitsfläche) anordenbar ist, die es einem Benutzer des Systems und/oder des Verfahrens ermöglicht, seine Hände und/oder Arme (ganz oder teilweise) unter der Halterung und/oder zwischen der Halterung und der Basis (und/oder der Arbeitsfläche) zur Veränderung des Demonstrationsobjekts zu bewegen. Der Abstandshalter kann dazu ausgebildet sein, das Display und die Kamera in einem Abstand von der Arbeitsfläche zu halten, der z. B. mindestens 5, 10 oder 15 Zentimeter und/oder höchstens 70, 50, 40 oder 30 Zentimeter beträgt und/oder in einem Abstand, bei dem das Display bis maximal auf Augenhöhe bzw. Stirnhöhe des Benutzers zu liegen kommt (also nicht höher liegt und so für den Benutzer einsehbar bleibt), wobei der Abstand durch eine Höhenverstellung nach individuellem Seh- bzw. Arbeitskomfort sowie gegebenenfalls in Abhängigkeit eines Demonstrationsobjektes und/oder der vollzogenen Aufgaben eingestellt oder ausgewählt werden kann.

Es kann vorgesehen sein, dass das Display, wenn es von der Halterung gehalten wird, im Wesentlichen horizontal oder in einem Winkel zur Horizontalen von beispielsweise höchstens oder weniger als 60, 45, der 30 Grad ausgerichtet ist. Ein geeignet gewählter Abstand zur Arbeitsfläche kann es dann vorzugsweise ermöglichen, dass das Display auch für einen mit seinen Händen und gegebenenfalls Unterarmen zwischen der Arbeitsfläche und der Halterung arbeitenden Benutzer einsehbar bleibt. Möglich ist aber auch eine zumindest annähernd rechtwinklige Anordnung mit zur im wesentlichen senkrechter oder stehender Ausrichtung des Displays.

Bei der ersten und/oder zweiten Station sind das Display und die Kamera erfindungsgemäss in einander entgegengesetzte Richtungen ausgerichtet, so dass die optischen Achsen von Display und Kamera in entgegengesetzte Richtungen weisen. Die Kamera kann dabei mit Vorteil auf der hinteren Seite (also auf der nicht zur Anzeige vorgesehenen Seite) des Displays angeordnet sein.

Eine derartige Anordnung ist beispielsweise vorteilhaft mit einem Abstandshalter in Form eines Tisches kombinierbar, wobei die Kamera mit ihrer optischen Achse von der Tischplatte aus nach unten in Richtung Arbeitsfläche ausgerichtet ist und das Display für einen typischerweise sitzenden oder stehenden Benutzer von oben einsehbar ist. Bei einer der Stationen kann die Blickrichtung auf das Display aber auch z. B. senkrecht zur optischen Achse der Kamera sein und im Betriebszustand senkrecht von der Halterung/Tischplatte aufragen. Ferner kann das wie zuvor erläutert Display schräg stehen.

In einer Ausführungsform umfasst die Halterung der ersten und/oder zweiten Station einen Auslegerarm, welcher die Kamera vom Display beabstandet hält. In einer derartigen Ausführungsform kann z. B. ein erster Teil der Halterung durch einen Rahmen für das Display in zuvor beschriebener Weise gebildet werden, während der Auslegerarm einen zweiten Teil der Halterung darstellt, welcher vom ersten Teil der Halterung und dem Display abragt. Aus ergonomischen Gründen ragt dabei der Auslegerarm dabei vorteilhaft in Richtung eines Benutzers, und entgegen der Blickrichtung des Benutzers auf das Display von diesem ab.

In einer Ausführungsform gilt für sowohl für die erste Station als auch für die zweite Station jeweils, dass die Kamera einen der Station zugeordneten Arbeitsraum erfasst, wobei der Arbeitsraum durch die Arbeitsfläche begrenzt, insbesondere nach hinten begrenzt, ist. Der der ersten Station zugeordnete Arbeitsraum ist ein erster Arbeitsraum und der der zweiten Station zugeordnete Arbeitsraum ist ein zweiter Arbeitsraum.

Im Einsatz einer derartigen Ausführungsform nehmen, wie nachfolgend näher erläutert, jeweils ein Benutzer/eine Benutzerin der ersten und zweiten Station eine -typischerweise manuelle - Arbeit im jeweiligen Arbeitsraum vor, welche von einem Benutzer/einer Benutzerin der jeweils anderen Station auf dem Display dieser Station mitverfolgt werden kann.

In einer Ausführungsform eines offenbarungsgemässen Verfahrens umfasst das Positionieren und Manipulieren eines ersten Demonstrationsobjektes in dem der ersten Station zugeordneten Arbeitsraum und ein zeitgleiches und/oder zeitversetztes Positionieren und Manipulieren eines zweiten Demonstrationsobjektes im der zweiten Station zugeordneten Arbeitsraum.

Erfindungsgemäss weist das Display zwei Anzeigebereiche auf. Dabei stellt ein erster Anzeigebereich das von der Kamera der anderen Station aufgenommene Bild dar, wie zuvor beschrieben. Ein weiterer zweiter Anzeigebereich stellt das von der Kamera derselben Station aufgenommene Bild dar. Auf diesem zweiten Anzeigebereich sieht der Benutzer, was an die andere Station übertragen wird bzw. welcher Teil seiner Arbeitsfläche auf dem Display der anderen Station für den dortigen Benutzer sichtbar ist. Auf diese Weise kann er sicher kontrollieren und entscheiden, was der Benutzer der anderen Station sehen soll. Der erste und zweite Anzeigebereich können zum Beispiel durch zwei auf einem Bildschirm nebeneinander dargestellte Fenster realisiert werden. Ferner kann zum Beispiel der zweite (typischerweise kleinere) Anzeigebereich dem (größeren) ersten Anzeigebereich überlagert bzw. in diesen eingeblendet werden. Grundsätzlich ist es auch möglich, für den ersten und zweiten Anzeigebereich jeweils ein separates erstes und zweites Display vorzusehen. Der im zweiten Anzeigebereich (z. B. Fenster) dargestellte Inhalt ist unabhängig vom im ersten Anzeigebereich (z. B. Fenster) dargestellten Inhalt.

In einer Variante einer derartigen Ausführungsform ist der zweite Anzeigebereich bei mindestens einer der Station ein- und ausblendbar gestaltet. Auf diese Weise kann der zweite Anzeigebereich z. B. lediglich zur Platzierung eines Objektes in den ersten Anzeigebereich eingeblendet und anschliessend wieder ausgeblendet werden. In einer weiteren Ausführungsform ist das Display dazu ausgelegt, alternativ den ersten oder zweiten Anzeigebereich z. B. in gemäss den Displayabmessungen grösster Darstellung anzuzeigen.

Das Demonstrationsobjekt, auf welches die Kamera der ersten Station vorzugsweise gerichtet ist, kann optisch (d.h. in seinem Aussehen) verändert werden. Beispielsweise kann ein auf einem Stück Papier dargestellter Lerninhalt oder ein im Arbeitsbereich z. B. auf der Arbeitsfläche oder zwischen Arbeitsfläche und Kamera angeordneter Gegenstand verändert bzw. manipuliert werden.

Zweckmässigerweise wird das Aussehen des Demonstrationsobjekts während der Aufnahme des oder der Bilder oder der Bildfolge oder Videoaufnahme verändert. Nach einer Ausführungsform kann also beispielsweise eine von der Kamera der ersten Station aufgenommene Bildfolge oder Videosequenz (enthaltend ein erstes Demonstrationsobjekt) auf dem Display der zweiten Station in Echtzeit angezeigt werden, und gleichzeitig kann optional eine von der Kamera der zweiten Station aufgenommene Bildfolge oder Videosequenz (enthaltend ein zweites Demonstrationsobjekt) auf dem Display der ersten Station in Echtzeit angezeigt werden.

Zwei Benutzer, von denen jeweils einer an einer der Stationen sitzt, können so z.B. jeweils unter Verwendung eines Schreibblocks zusammenarbeiten und Informationen austauschen. Beispielsweise kann so eine betriebliche Schulung durchgeführt werden.

In einer typischen Anwendung des Fernunterrichts ist das Demonstrationsobjekt z. B. ein Papier, auf dem z. B. eine Rechenaufgabe, eine geometrische Konstruktion, eine Grammatik-Übung oder dergleichen vom Benutzer/der ersten und zweiten Station jeweils interaktiv bearbeitet werden können. In einer anderen Beispielhaften Anwendung ist das Demonstrationsobjekt z. B. ein technisches Gerät, eine Baugruppe oder ähnliches, an welchem z. B. Montageschritte, Justier- und Wartungsarbeiten etc. geschult und geübt werden.

Entsprechend kann zwischen der Arbeitsfläche und der Kamera ein Demonstrationsobjekt, beispielsweise ein Schriftmedium, (insbesondere auf der Arbeitsfläche aufliegend) angeordnet sein oder werden. Die Kamera ist oder wird auf das Demonstrationsobjekt gerichtet und das Display ist oder wird vorzugsweise von der Arbeitsfläche und/oder vom Demonstrationsobjekt weg gerichtet.

Das Demonstrationsobjekt kann bevorzugt ein informationstragendes Objekt sein, das nach aussen hin sichtbar dargestellte oder darstellbare Informationen aufweist, die vorzugsweise veränderbar sind. Zum Beispiel kann es sich beim Demonstrationsobjekt um ein Blatt Papier, einen tragbarer Computer (z.B. ein (weiterer) Tablet-Computer Smartphone etc.) oder ein Produkt oder Werkstück handeln, mithilfe dessen ein Lerninhalt vermittelt werden soll.

In einer Ausführungsform gilt für mindestens eine Station und bevorzugt jeweils für die erste und die zweite Station, dass das Display und der Arbeitsraum für den Benutzer gemeinsam einsehbar sind. Es ist insbesondere vorteilhaft, wenn der Benutzer, ohne seinen Kopf bewegen (z.B. nicken) zu müssen, sowohl das Demonstrationsobjekt oder die Arbeitsfläche als auch das Display allein durch Augenbewegungen im Blick behalten kann. Dies ist beispielsweise bei der alleinigen Verwendung eines üblichen Desktop- oder Laptop-Computers und einer bekannten Kamera nicht gegeben.

Eine derartige Ausführungsform ist insoweit vorteilhaft, als jeder der Benutzer, beispielsweise Leherer/Lehrerin und Schüler/Schülerin, jeweils gleichzeitig im Arbeitsraum der eigenen Station z. B. an einem Demonstrationsobjekt arbeiten und das Vorgehen im Arbeitsraum der jeweils anderen Station verfolgen kann, ohne hierfür die Blickrichtung wesentlich ändern zu müssen.

Erfindungsgemäss sind bei der ersten und zweiten Station die Kamera und das Display derart zueinander angeordnet, das ein vom Display angezeigtes Bild nicht von der Kamera derselben Station erfasst wird. Entsprechend kann ein Bereitstellen der ersten Station und der zweiten Station derart erfolgen, dass die Kamera der ersten Station das vom Display der ersten Station angezeigte zweite Bild nicht erfasst und die Kamera der zweiten Station das vom Display der zweiten Station angezeigte erste Bild nicht erfasst.

Durch eine derartige Anordnung werden optische Rückkopplungen, welche gemäss Stand der Technik durch aufwändige Zusatzmassnahmen reduziert oder unterdrückt werden müssen, von vornherein ausgeschlossen. Eine derartige Anordnung ist damit insbesondere in Hinblick auf einen robusten, einfachen und Kostengünstigen Aufbau sinnvoll. Bei einer zuvor beschriebenen Ausführungsform, bei der das Display und die Kamera bzw. die optische Achse der Kamera in unterschiedliche Richtung weisen, ist diese Voraussetzung grundsätzlich erfüllt. Sind - z. B. bei einer von dem Display an einem Auslegerarm abragenden Kamera - die Blickrichtung auf das Display und die optische Achse der Kamera senkrecht oder schräg zueinander, lässt sich die Bedingung durch entsprechende Wahl von Abstand und/oder Neigung zwischen Kameraachse und Display mittels bekannter geometrischer Überlegungen erfüllen.

In einer Ausführungsform erfolgt das Aufnehmen, das Übermitteln und das Anzeigen des ersten und zweiten Bildes zumindest im Wesentlichen zeitgleich und in Echtzeit.

In einer Ausführungsform ist das erste und zweite Bild jeweils ein kontinuierliches Videobild.

Es kann optional vorgesehen sein, dass zusätzlich zur beschriebenen Kamera als Teil der Station eine weitere Kamera vorgesehen ist, die in die entgegengesetzte Richtung ausgerichtet ist. Es kann dann optional möglich sein, hinsichtlich der an die jeweils andere Station übertragenen Bilder zwischen den beiden Kameras zu wechseln, z.B. mit einem Fingerdruck. Dies ermöglicht eine Kommunikation von Angesicht zu Angesicht zwischen den Benutzern der Stationen.

Insbesondere falls vorgesehen ist, dass der Abstand zwischen dem Display und der Kamera und/oder deren relative Ausrichtung unveränderbar sind, kann es von Vorteil sein, wenn die Station einen Reflektor, insbesondere einen Spiegel aufweist. Der Reflektor ist vorzugsweise im Wesentlichen plan ausgebildet.

Der Reflektor ist mit Vorteil dazu ausgebildet und/oder so angeordnet, dass Licht von der Arbeitsfläche und/oder vom Demonstrationsobjekt (vgl. unten) durch den Reflektor 10 zur Kamera umgelenkt wird und in der Kamera ein Bild der Arbeitsfläche und/oder des Demonstrationsobjekts (vgl. unten) erzeugt.

Ein Winkel und/oder die Ausrichtung der Reflexionsfläche relativ zur Arbeitsfläche und/oder relativ zur Halterung können veränderbar oder unveränderbar ausgebildet sein.

In einer Ausführungsform umfasst die erste und die zweite Station ferner jeweils ein Mikrofon und eine akustische Wiedergabeeinrichtung, wobei nachfolgend von einem Lautsprecher ausgegangen wird, grundsätzlich aber z. B. auch ein Kopfhörer sein könnte. Die beiden Stationen sind in einer derartigen Ausführungsform dazu ausgebildet, ein vom Mikrofon der ersten Station aufgezeichneten ersten Ton mittels der Kommunikationseinrichtungen von der ersten Station an die zweite Station zu übermitteln und über den Lautsprecher der zweiten Station wiederzugeben sowie ein vom Mikrofon der zweiten Station aufgezeichneten zweiten Ton mittels der Kommunikationseinrichtungen von der zweiten Station an die erste Station zu übermitteln und über den Lautsprecher der ersten Station wiederzugeben.

Die Aufzeichnung, Übermittlung und Wiedergabe des ersten bzw. zweiten Tones erfolgt bevorzugt zumindest im Wesentlichen zeitgleich und in Echtzeit mit der Aufnahme, Übermittlung und Wiedergabe des ersten und zweiten Bildes.

Mikrofon und Lautsprecher sind bevorzugt in einer konstruktiven Einheit mit Display und/oder Kamera angeordnet. Insbesondere können Kamera und/oder Lautsprecher von der Halterung aufgenommen oder an dieser befestigt sein.

Ein Ton ist Zusammenhang dieses Dokuments ein grundsätzlich beliebiges Schallereignis, insbesondere eine Stimme/Sprache, ein Klang, ein Geräusch und/oder eine Abfolge oder Mischung eines oder mehrere der vorgenannten.

Die Datenübertragung, insbesondere die Übertragung von Bildern und/oder Tönen zwischen den Kommunikationseinrichtungen der Stationen kann in analoger und/oder digitaler Form umfassen. Ein zur Datenübertragung genutzter Kommunikationskanal kann, je nach Ausführung der Stationen und gegebenenfalls je nach Anwendung, z. B. eine LAN/WLAN-Verbindung, eine direkte Funkverbindung z. B. mittels Bluetooth, und/oder eine Internetverbindung über das World Wide Web umfassen.

Im Verfahren kann eine kontinuierliche Aufnahme, Übermittlung und Ausgabe (bzw. Anzeige) von Bild und/oder Ton wie oben beschrieben während einer Zeitspanne von 30 mindestens 5, 10, 30 oder 60 Minuten und/oder höchstens 24, 12, 6 oder 3 Stunden oder auch länger vorgesehen sein.

Gemäss einem weiteren Aspekt betrifft die Offenbarung ein System für den Informationsaustausch, beinhaltend eine erste und eine zweite Station. Die erste und die zweite Station weisen jeweils ein Display, eine Kamera, und eine mit dem Display und der Kamera verbundene Kommunikationseinrichtung auf. Die beiden Stationen sind dazu ausgebildet, ein von der Kamera der ersten Station aufgenommenes erstes Bild mittels der Kommunikationseinrichtungen von der ersten Station an die zweite Station zu übermitteln und auf dem Display der zweiten Station anzuzeigen sowie ein von der Kamera der zweiten Station aufgenommenes zweites Bild mittels der Kommunikationseinrichtungen von der zweiten Station an die erste Station zu übermitteln und auf dem Display der ersten Station anzuzeigen. Bei der ersten und/oder zweiten Station die Kamera und das Display derart zueinander angeordnet, das ein vom Display angezeigtes Bild nicht von der Kamera derselben Station erfasst wird. Für die erste und zweite Station gilt dabei jeweils, dass die Kamera beabstandet von einer Arbeitsfläche positioniert ist, z.B. durch einen Abstandshalter, und die Kamera die Arbeitsfläche erfasst. Für die Arbeitsfläche und seine Anordnung und Orientierung gelten dabei die gleichen Überlegungen wie zuvor und nachfolgend im Kontext anderer Aspekte dargestellt. Die zuvor sowie nachfolgend in Ausführungsbeispielen erläuterten Systeme zum Informationsaustausch sind ferner in Übereinstimmung mit diesem Aspekt der Offenbarung realisiert und stellen somit beispielhafte Ausführungsformen auch für diesen Aspekt der vorliegenden Offenbarung der vorliegenden Offenbarung da.

So kann insbesondere bei einem System zum Informationsaustausch gemäss diesem Aspekt der Erfindung in der zuvor dargestellten Weise das erste Bild in einem ersten Anzeigebereich des Displays der zweiten Station dargestellt werden und das zweite Bild in einem ersten Anzeigebereich des Displays der ersten Station. Ebenso kann das erste Bild in einem zweiten Anzeigebereich des Displays der ersten Station dargestellt werden und das zweite Bild in einem zweiten Anzeigebereich des Displays der zweiten Station.

Gemäss einem weiteren Aspekt betrifft die Offenbarung ein Verfahren zum Informationsaustausch.

Das Verfahren umfasst das Bereitstellen einer ersten Station und einer zweiten Station, wobei die erste und die zweite Station jeweils ein Display, eine Kamera, und eine mit dem Display und der Kamera verbundene Kommunikationseinrichtung aufweisen. Sowohl für die erste Station als auch die auch für die zweite Station gilt dabei jeweils, dass das Display und die Kamera in einem Abstand von einer Arbeitsfläche angeordnet ist. Das Bereitstellen der ersten Station und/oder der zweiten Station erfolgt derart, dass die Kamera der ersten Station das vom Display der ersten Station angezeigte zweite Bild nicht erfasst und/oder die Kamera der zweiten Station das vom Display der zweiten Station angezeigte erste Bild nicht erfasst. Das Verfahren umfasst ferner das Aufnehmen eines ersten Bildes durch die Kamera der ersten Station sowie ein Übermitteln des ersten Bildes and die zweite Station und ein Anzeigen des ersten Bildes auf dem Display der zweiten Station. Das Verfahren umfasst ferner das Aufnehmen eines zweiten Bildes durch die Kamera der zweiten Station sowie Übermitteln des zweiten Bildes an die erste Station und Anzeigen des zweiten Bildes auf dem Display der ersten Station.

Sowohl die obige allgemeine Darstellung der Erfindung insgesamt und ihrer Aspekte als auch die nachfolgende Darstellung von Ausführungsbeispielen beruht weitgehend auf einer Anordnung mit lediglich zwei Stationen. Natürlich kann das System auch mehr als zwei Stationen aufweisen. Pro Station ist zur Durchführung des Verfahrens vorzugsweise ein Benutzer vorgesehen, mehrere Benutzer pro Station sind jedoch möglich.

In einer derartigen Ausführungsform umfasst das System zum Informationsaustausch eine Vielzahl von z. B. drei oder mehr Stationen, wobei jede Station den zuvor sowie nachfolgend anhand von Ausführungsbeispielen dargestellten Aufbau aufweist und entsprechende Funktionalitäten bereitstellt. In einer derartigen Ausführungsform können mehrere Stationen in Echtzeit Informationen miteinander austauschen. In einer Ausführungsform wird dabei bei jeder Station das von der Kamera der jeweiligen Station im zweiten Anzeigebereich dargestellt und das von der Kamera oder den Kameras einer, mehrerer oder aller anderen Station aufgenommene Bild.

In einem Beispiel besteht das System beispielsweise aus einer ersten Station und mehreren zweiten Stationen, wobei das von der Kamera der ersten Station aufgenommene Bild an mehrere oder alle zweiten Stationen übermittelt und im ersten Anzeigebereich dieser zweiten Stationen dargestellt wird, während der zweite Anzeigebereich der zweiten Stationen gemäss vorheriger Darstellung jeweils das von der Kamera dieser zweiten Station aufgenommene Bild darstellt. Der erste Anzeigebereich der ersten Station kann, z. B. in mehreren Fenstern oder einem mehrteilig unterteilten Fenster, die von den Kameras der verschiedenen zweiten Stationen aufgenommen Bilder darstellen. Alternativ oder zusätzlich kann die erste Station dazu ausgelegt sein, in ihrem ersten Anzeigebereich das von der Kamera aufgenommene Bild einer z. B. vom Benutzer der ersten Station ausgewählten zweiten Station anzuzeigen. Eine derartige Konfiguration eignet sich z. B. für ein virtuelles Klassenzimmer, wobei der Benutzer der ersten Station die Funktion des Lehrers und die Benutzer der zweiten Stationen jeweils die Rolle eines Schülers innehat.

In einer Variante eines derartigen Systems können die einzelnen Stationen derart gleichberechtigt sein, dass jede der Stationen jeweils die Rolle der ersten Station übernehmen kann und die anderen Stationen jeweils eine zweite Station darstellen. In einer derartigen Ausführungsform kann z. B. die Rolle eines Sprechers oder Lehrers wechselnd vom Benutzer einer beliebigen Station übernommen werden, während die Benutzer der anderen Stationen jeweils die Rolle eines "Schülers" haben.

In einer weiteren Variante eines Systems zum Informationsaustausch mit einer Vielzahl an Stationen ist jede Station dazu ausgelegt, dass von der Kamera irgend einer anderen Station aufgenommene Bild in ihrem ersten Anzeigebereich darzustellen. Dabei kann jede Station mittels des Benutzerinterfaces eine oder mehrere Stationen auszuwählen, deren Bild in ihrem ersten Anzeigebereich dargestellt werden soll.

In einem System zum Informationsaustausch mit einer Vielzahl von Systemen kann jede Station dazu ausgebildet sein, ein von der Kamera dieser Station aufgenommene Bild z. B.. gleichzeitig und in Echtzeit an alle anderen Stationen zu übermitteln. Alternativ können die Stationen dazu ausgebildet sein, ein von ihrer Kamera aufgenommene Bild nur an eine oder eine Auswahl an weiteren Stationen zu übermitteln. So kann eine Übermittlung insbesondere an diejenige weitere Station oder Stationen erfolgen, die ein von der Kamera dieser Station aufgenommene Bild im ersten Anzeigebereich ihres jeweiligen Displays darstellen sollen.

In einem System zum Informationsaustausch mit einer Vielzahl von Systemen kann die optional vorhandene Tonübertragung zwischen den Stationen beispielsweise derart mit der Bildübertragung synchronisiert werden, dass der von einer Station wiedergegebene Ton und das im ersten Anzeigebereich der Station angezeigt Bild von derselben weiteren Station stammen beziehungsweise aufgezeichnet werden. Wird gemäss einigen Ausführungsformen im ersten Anzeigebereich das von mehreren oder allen weiteren Stationen aufgenommene Bild angezeigt, kann eine Auswahl des Tonsignals z. B. separat mittels Auswahl durch dem Benutzerauswahl erfolgen.

In einem System mit einer Vielzahl von Benutzern kann jede Station auch dazu ausgelegt sein, die von den Kameras aller oder einer Auswahl anderer Stationen aufgenommenen Bildern in ihrem jeweiligen ersten Anzeigebereich darzustellen, z. B. in jeweils einem Fenster oder entsprechend der Anzahl der Stationen unterteilten Fenster. Eine Station kann ferner dazu ausgelegt sein, das von der Kamera einer gewünschten anderen Station im Display oder seinem ersten Anzeigebereich vergrössert, z. B. formatfüllend darzustellen. Die Auswahl kann dabei - je nach konkreter Realisierung der Station, z. B. durch Antippen des gewünschten Bildes, sofern das Display der Station einen Touchscreen aufweist. Alternativ oder Zusätzlich kann die Auswahl des gewünschten Bildes z. B. per Maus, oder durch Eingabe einer jeder Station individuell zugeordneten Kennung, z. B. einer alphanumerischen Kennung bzw. eines jeder Station individuell zugeordneten Namens erfolgen.

Die Merkmale zuvor sowie nachfolgend im Rahmen konkreter Ausführungsbeispiele sind, soweit nicht explizit anders dargestellt, als bevorzugte Merkmale zu betrachten sind, auch wenn sie nicht explizit als solche bezeichnet werden. Die Merkmale seien separat (als Teil eines beliebigen Systems oder eines beliebigen Verfahrens) und - soweit sie sich nicht aufgrund dem Fachmann bekannten technischen Überlegungen ausschliessen lässt - in beliebiger Kombination offenbart.

### Figurenbeschrieb

Fig. 1 zeigt eine Ausführungsform eines offenbarungsgemässen Systems;
Fig. 2 zeigt eine als soche nicht erfindungsgemässe Ausführungsform eines Systems.
Fig. 3 zeigt eine Ausführungsform eines erfindungsgemässen Systems mit einer Vielzahl an Stationen.
Fig. 4 zeigt eine zweite Ausführungsform eines erfindungsgemässen Systems mit einer Vielzahl an Stationen.

### Ausführungsbeispiele

Die Erfindung wird nachfolgend anhand der Zeichnungen beispielhaft erläutert. Dabei werden gleiche oder korrespondierende Elemente verschiedener Ausführungsformen jeweils mit identischen Bezugszeichen bezeichnet.

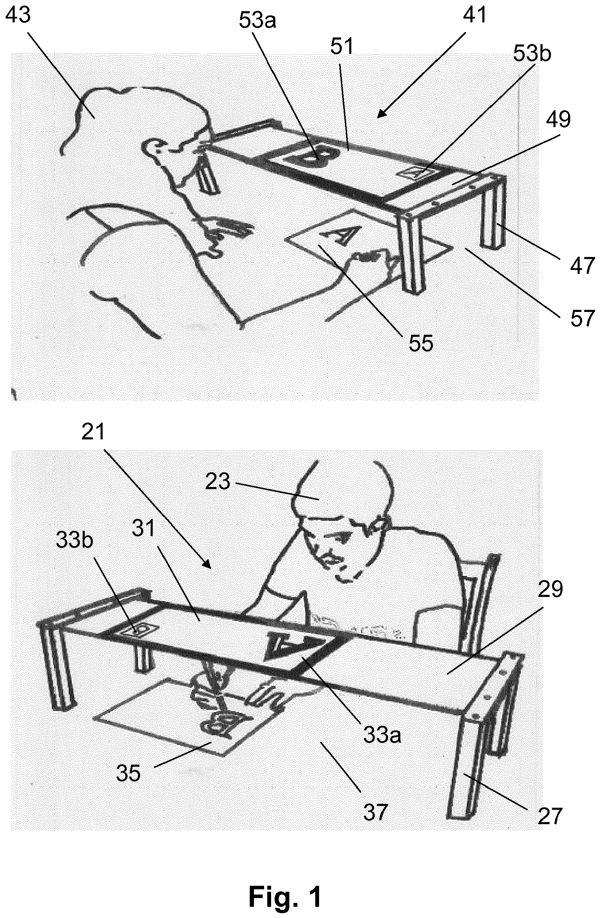

Nachfolgend wird zunächst auf Fig. 1 Bezug genommen. Fig.1 stellt eine Ausführungsform eines offenbarungsgemässen Systems 11 mit einer ersten Station 21 und einer zweiten Station 41 dar, wobei Systeme der in diesem Dokument beschriebenen Art natürlich auch mehr als zwei Stationen aufweisen können.

Die Stationen 21,41 sind bei Betrieb des Systems 11 räumlich voneinander getrennt, z.B. in unterschiedlichen Gebäuden und/oder Räumen angeordnet oder in unterschiedlichen Teilen desselben Raumes.

Jede der beiden Stationen 21,41 weist einen Abstandshalter (hier in der Form eines Tisches) auf. Der Abstandshalter umfasst eine Halterung 29,49 (hier in der Form einer Tischplatte) und eine Basis 27,47 (hier in der Form von Tischbeinen) auf, welche direkt oder indirekt miteinander verbunden sind. Die Basis bzw. Tischbeine 27, 47 können optional in verschiedenen Längen vorhanden und austauschbar und/oder stufenlos oder in Stufen höhenverstellbar sowie zu Transport und Aufbewahrung von der Halterung 29, 49 demontierbar sein.

Die Basis 27,47 dient im vorliegenden Fall der Auflage auf einer Arbeitsfläche 37,57, z. B. einer (Schreib-)Tischplatte, auf der jeweils ein Demonstrationsobjekt 35,55 (hier in der Form eines Schreibblocks) angeordnet ist.

Jede Station 21,41 weist eine Kamera und ein Display auf, die im vorliegenden Fall jeweils Teile eines Tablet-Computers 31,51 sind. Die Halterung 29,49 ist dazu ausgebildet, sowohl das Display als auch die Kamera zu tragen und in einem Abstand von der Arbeitsfläche 37,57 zu halten. Der Abstand sollte so bemessen sein, dass ein Benutzer (z.B. Lehrerin 43, Student 23) seine Hände und/oder Unterarme zwischen der Arbeitsfläche 37,57 und der Kamera und/oder dem Display bewegen kann, um das dort angeordnete Demonstrationsobjekt 35,55 visuell zu verändern bzw. zu manipulieren.

Wenn das Display und die Kamera derselben Station 21,41 so relativ zueinander ausgerichtet sind, dass die Betrachtungsrichtung des Displays der Aufnahmerichtung der Kamera entspricht, kann es sinnvoll sein, wenn der beschriebene Abstand nicht zu gross ist, also das Display höchstens auf Augenhöhe oder Stirnhöhe des Benutzers gehalten ist, damit das Display für die Person sichtbar bleibt.

Zur Durchführung eines Verfahrens zum Austausch von Informationen werden in Echtzeit von den Kameras aufgenommene Bilder der Demonstrationsobjekte 35,55 zwischen den Stationen 21,41 ausgetauscht, z. B. über Funkschnittstellen, etwa Bluetooth, LAN, WLAN und/oder das Internet. Eine Lehrerin 43 kann so am Ort der zweiten Station 41 ein Demonstrationsobjekt 55 verändern, also z.B. eine Zeichnung auf einem Schreibblock anbringen, wobei diese Veränderung einem Studenten 23, welcher sich am Ort der ersten Station 21 befindet, zur Kenntnis gebracht wird.

Der Tablet-Computer 31,51 (oder alternativ ein Smartphone) liegt auf der Halterung 29,49 auf, wobei die Halterung 29,49 (in Form einer Tischplatte) ein Loch oder einen transparenten Bereich aufweist, über dem die Kamera angeordnet ist, und durch das bzw. den das Licht vom Demonstrationsobjekt 35,55 zur Kamera gelangen kann (die Halterung 29,49 könnte ganz oder teilweise aus Glas oder aus einem anderen transparenten Material gefertigt sein). Die Kamera ist so in der Lage, ein Bild des sich in ihrem Erfassungsbereich befindlichen Demonstrationsobjekts 35,55 aufzunehmen und mittels einer Kommunikationseinrichtung, welche ebenfalls Teil der Station 21,41 (im vorliegenden Fall als Teil des Tablet-Computers 31,51) ist, an die jeweils andere Station 21,41 zu übermitteln und dort auf dem Display anzuzeigen. Die Aufnahme durch die Kamera und die Anzeige auf dem Display erfolgen zweckmässigerweise in Echtzeit, es ist aber auch eine zeitlich verzögerte Anzeige möglich.

Um einen interaktiven Informationsaustausch, z.B. einen Unterricht, zu ermöglichen, ist es sinnvoll, wenn die beiden Stationen 21,41 dazu programmiert und/oder ausgebildet sind, in Echtzeit das von der Kamera der ersten Station 21 aufgenommene Bild (oder Bildsequenz bzw. Videosequenz) auf dem Display der zweiten Station 41 anzuzeigen und das von der Kamera der zweiten Station 41 aufgenommenes Bild (oder Bildsequenz bzw. Videosequenz) auf dem Display der ersten Station 21 anzuzeigen. So können sowohl die Lehrerin 43 als auch der Student 23 in Echtzeit mitverfolgen, was die jeweils andere Person tut.

Gleichzeitig zur oben beschriebenen Anzeige wird das von der Kamera der ersten Station 21 aufgenommene Bild (oder Bildsequenz) auf dem Display der ersten Station 21 und das von der Kamera der zweiten Station 41 aufgenommene Bild (oder Bildsequenz) auf dem Display der zweiten Station 41 angezeigt. Dadurch ist es möglich, dass die Benutzer, d.h. im vorliegenden Fall die Lehrerin 43 und der Schüler 23, ihre Blicke nicht vom Display abwenden müssen, um zu kontrollieren, was sie selbst tun.

Das Display einer Station 21, 41 ist (unabhängig von der Ausgestaltung der Station) jeweils in einen ersten Anzeigebereich 33a, 53a und einen zweiten Anzeigebereich 33b, 53b aufgeteilt. Der erste Anzeigebereich 33a, 53a ist ausgebildet, das von der jeweils anderen Station übermittelte Bild (oder Bildsequenz) anzuzeigen (vgl. oben), während der zusätzliche zweite Anzeigebereich 33b, 53b dazu ausgebildet ist, das Bild (oder Bildsequenz) anzuzeigen, das von der Kamera aufgenommen wird, welche derselben Station wie das Display mit dem entsprechenden Anzeigebereich zugeordnet ist. Auf diese Weise benötigt der Benutzer keine freie Sicht auf das Demonstrationsobjekt bzw. muss seinen Blick nicht vom Display abwenden, um das Demonstrationsobjekt zu betrachten, da dieses zusätzlich auf dem Display angezeigt wird. Je nach Demonstrationsobjekt und vorgenommener Arbeit/Manipulation kann ein direkter Blick auf das Demonstrationsobjekt aufgrund der plastischen bzw. dreidimensionalen Wahrnehmung sowie in Hinblick auf etwaige Latenzzeiten bei der Darstellung auf dem Display jedoch vorteilhaft sein. Ferner hat der Benutzer bei dieser Ausführungsform jeweils eine genaue Kontrolle darüber, was er dem Benutzer der anderen Station zeigt und was nicht. Weitere Aspekte und Varianten einer derartigen Ausführungsform sind in der allgemeinen Beschreibung der Erfindung dargestellt.

Die Kommunikationseinrichtungen der beiden Stationen 21,41 sind zweckmässigerweise zur Übertragung von zumindest Bildinformationen von der Kamera der ersten Station 21 auf das Display der zweiten Station 41 und von der Kamera der zweiten Station 41 auf das Display der ersten Station 21 ausgebildet programmiert. Die erste und/ oder zweite Station 21,41 kann zusätzlich ein Mikrofon und/oder einen Lautsprecher umfassen, wobei die Kommunikationseinrichtungen dann zweckmässigerweise zur Übertragung von Toninformationen vom Mikrofon der ersten Station 21 auf den Lautsprecher der zweiten Station 41 und/oder vom Mikrofon der zweiten Station 41 auf den Lautsprecher der ersten Station 21 ausgebildet sind. Auf diese Weise ist es ermöglicht, dass der Student 23 und die Lehrerin 43 sich während des Unterrichts (Informationsaustausch) unterhalten können.

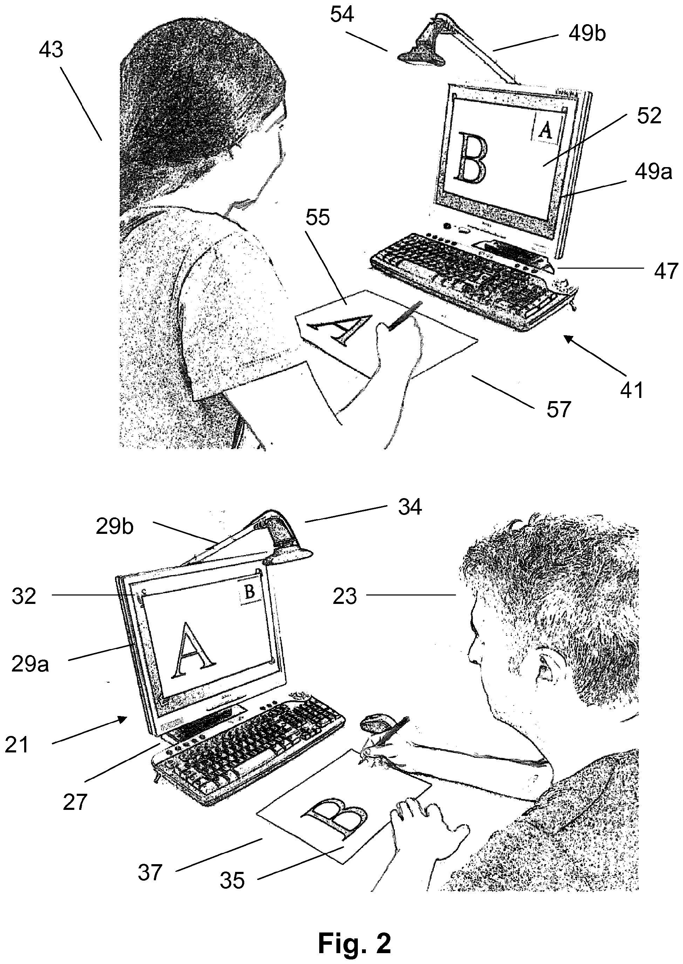

Nachfolgend wird zusätzlich auf Fig. 2 Bezug genommen. Fig. 2 stellt eine als solche nicht erfindungsgemässe Ausführungsform eines Systems zum Informationsaustausch dar. Im Interesse einer knappen Darstellung werden nur solche Aspekte näher erläutert, in welchen sich die Ausführungsform von der zuvor mit Bezug auf Figur 1 beschriebenen Ausführungsform unterscheidet.

Im Gegensatz zur Ausführungsform nach Figur 1 basieren die Stationen 21, 41 in der Ausführungsform nach Fig. 2 nicht auf der Verwendung von Tablet-Computern oder Smartphones, bei welchen Kamera und Display jeweils wie zuvor beschrieben entgegengesetzt ausgerichtet sind. Vielmehr sind die Stationen 21, 41 hier auf der Basis von Desktop-Computern, Laptops oder Workstations (als solche nicht dargestellt) grundsätzlich bekannter Art realisiert.

Die Basis 27, 47 der Stationen 21, 41 wird dabei jeweils durch den Fuss 27, 47 eines Monitors gebildet. Auf dem Fuss 27, 47 ist jeweils ein erster Halterungsteil 29a 49a in Form eines Rahmens z. B. schwenkbar montiert. Das Display 32, 52 ist beispielhaft fest in den Rahmen bzw. den Halterungsteil 29a, 49a der Halterung montiert, könnte aber auch in diesen lösbar eingesetzt, etc. sein.

Vom ersten Halterungsteil 29a, 49a der Halterung ragt - beispielhaft of der Oberseite - ein Auslegerarm in Richtung des Benutzers 23, 43 ab, welcher einen zweiten Halterungsteil 29b, 49b darstellt und welcher an seinem dem Display 32, 52 gegenüberliegenden Ende die Kamera 34, 54 trägt. Die Kamera 34, 54 ist so ausgerichtet, dass ihr Bildbereich die zwischen Display 32, 52 und Benutzer 23, 43 befindliche Arbeitsfläche 37, 57 erfasst. Hierzu ist die optische Achse der Kamera 34, 54 senkrecht gegenüber dem Display 32, 52 oder auch etwas gegenüber der senkrechten geneigt. In die Kamera 34, 54 kann optional ein Mikrofon integriert sein.

Der zweite Halterungsteil 29b, 49b kann optional gegenüber dem ersten Halterungsteil 29, 49b in einem oder mehreren Freiheitsgraden bewegbar, z. B. schwenkbar, drehbar oder neigbar sein, z. B. mittels Scharnier oder Kugelgelenk. Ebenso kann die Kamera 34, 54 beweglich am zweiten Halterungsteil 29b, 49 montiert sein. Die Befestigung des zweiten Halterungsteils 29b, 49b am ersten Halterungsteil 29a, 49a erfolgt z. B. mittels einer Klemme oder eine Magnethalterung.

Sowohl bei der Anordnung nach Figur 1 als auch bei der Anordnung nach Figur 2 sind Kamera und Display jeweils so ausgerichtet, dass das vom Display angezeigte Bild von der Kamera der selben Station nicht erfasst wird, mindestens der Anzeigebereich des Displays also ausserhalb des aufgenommenen Bildbereiches liegt. Bei der Ausführungsform nach Figur 1 ist dies durch die entgegengesetzte Ausrichtung von Kamera und Display gegeben. Bei der Ausführungsform nach Figur 2 erfolgt dies durch entsprechende relative Ausrichtung bzw. Neigung zwischen Display 32, 52 und Kamera 34, 54.

Ein erfindungsgemässes System besteht nicht notwendigerweise aus zwei vollständig identisch aufgebauten Stationen. In einer alternativen Ausführungsform ist z. B. eine Station gemäss Figur 1 realisiert, eine zweite Station gemäss Figur 2. Ebenso könne eine oder beide Stationen gemäss weiteren Ausführungsformen und/oder Aspekten der vorliegenden Offenbarung realisiert sein.

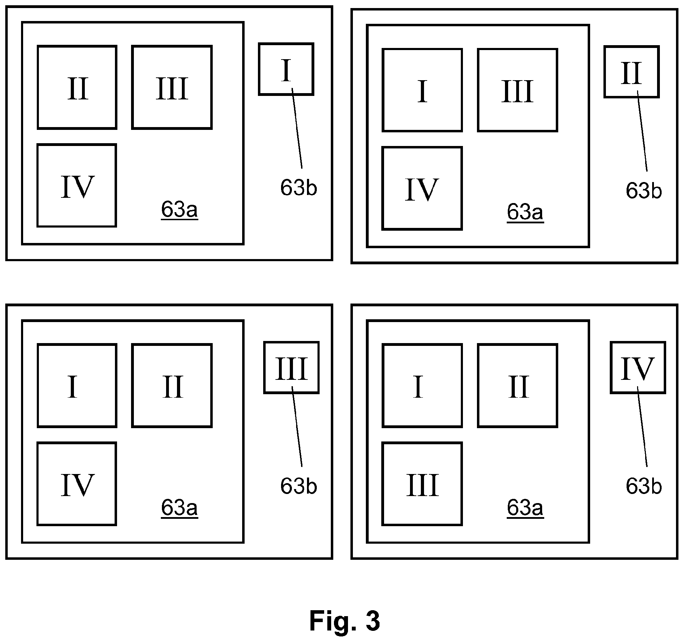

Nachfolgend wird zusätzlich auf Figur 3 Bezug genommen. Figur 3 zeigt die von den Displays der einzelnen Stationen angezeigten Bilder in einer exemplarischen Anordnung mit vier Stationen, welche mit I, II, II, IV bezeichnet sind. Jede Station kann dabei z. B. gemäss der Darstellung aus Figur 1 oder Figur 2 oder nach einer anderen Ausführungsform realisiert sein, wobei die verschiedenen Stationen gleich oder verschieden realisiert sein können. Der erste Anzeigebereich ist für jede Station einheitlich mit 63a und der zweite Anzeigebereich mit 63b referenziert.

Bei jeder der Stationen ist der erste Anzeigebereich 63a in mehrere Teile unterteilt und/oder umfasst mehrere Fenster, welche jeweils das von den Kameras der anderen Stationen aufgenommenen Bilder darstellen, während der beispielhaft kelinere Anzeigebereich 63b das von der Kamera der jeweils eigenen Station aufgenommene Bild darstellt. Wie in der allgemeinen Beschreibung erläutert kann der zweite Anzeigebereich 63 z. B. ausblendbar sein, wobei dann z. B. der erste Anzeigebereich 63a die gesamte Displayfläche einnimmt. In einer beispielhaften Ausführung kann der Benutzer jeder Station eines der Fenster im ersten Anzeigebereich z. B. durch Antippen per Touchscreen oder Anklicken per Maus auswählen und vergrössert darstellen, so dass es z. B. den gesamten ersten Anzeigebereich 63 ausfüllt.

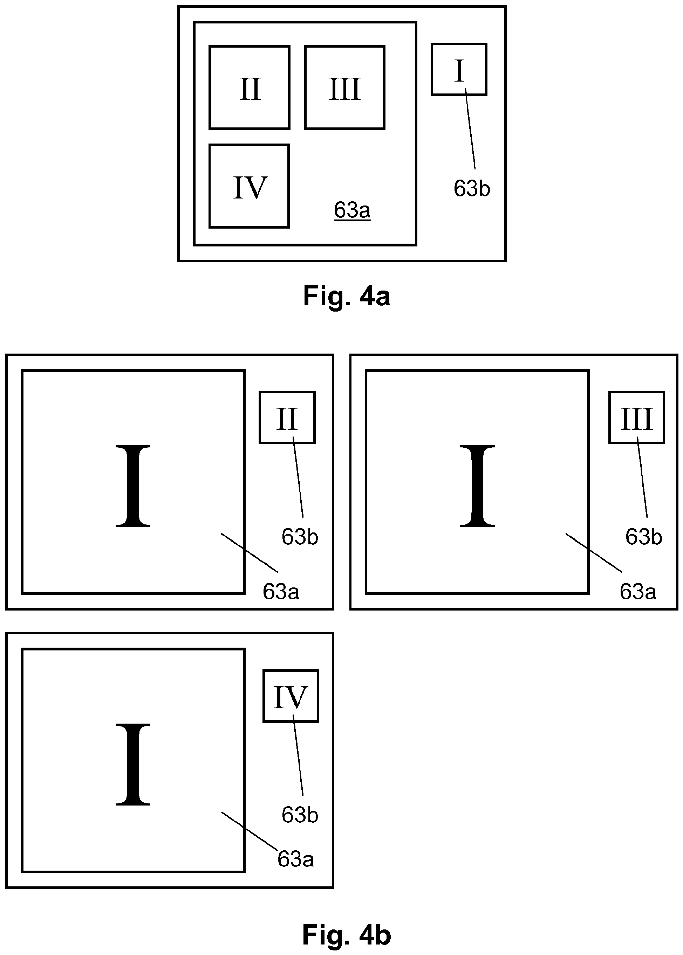

Nachfolgend wird zusätzlich auf Figur 4a, 4b Bezug genommen. Figur 4a, 4b zeigen die von den Displays der einzelnen Stationen angezeigten Bilder in einer weiteren exemplarischen Anordnung mit vier Stationen I, II, III, IV. Die Stationen sind beispielhaft für einen Fernunterricht mit einem Lehrer oder Tutor und drei Schülern oder Studenten ausgelegt oder konfiguriert.

Der Lehrer/Tutor benutzt dabei die Station I, deren Displaybild beispielhaft in Figur 4a dargestellt ist. Die Schüler/Studenten benutzen die Stationen II, III, IV, deren Displayinhalte in Figur 4b dargestellt sind.

Dabei stellt die Station I des Lehrers/Tutors im ersten Anzeigebereich 63a z. B. die von den Kameras der drei weiteren Station II, II, IV aufgenommenen Bilder in selbiger Weise wie zuvor mit Bezug auf Figur 3 beschrieben dar. Die Stationen II, III, IV der Schüler/Studenten stellen im ersten Anzeigebereich 63a jeweils das von der Kamer a der ersten Station I aufgenommene Bild dar. Im zweiten Anzeigebereich 63b stellt jede Station das von der Kamera dieser Station aufgenommene Bild dar.

## Patentansprüche

1. System (11) für den Informationsaustausch, beinhaltend eine erste und eine zweite Station (21,41), wobei
- die erste und die zweite Station (21,41) jeweils ein Display, eine Kamera, einen Abstandshalter und eine mit dem Display und der Kamera verbundene Kommunikationseinrichtung aufweisen, und
- die beiden Stationen (21,41) dazu ausgebildet sind, ein von der Kamera der ersten Station (21) aufgenommenes erstes Bild mittels der Kommunikationseinrichtungen von der ersten Station (21) an die zweite Station (41) zu übermitteln und in einem ersten Anzeigebereich des Displays der zweiten Station (41) anzuzeigen sowie ein von der Kamera der zweiten Station (41) aufgenommenes zweites Bild mittels der Kommunikationseinrichtungen von der zweiten Station (41) an die erste Station (21) zu übermitteln und in einem ersten Anzeigebereich des Displays der ersten Station (21) anzuzeigen, und
- wobei die beiden Stationen ferner dazu ausgebildet sind, das von der Kamera der ersten Station (21) aufgenommene Bild in einem zweiten Anzeigebereich des Displays der ersten Station (21) darzustellen und das von der Kamera der zweiten Station (41) aufgenommene Bild in einem zweiten Anzeigebereich des Displays der zweiten Station (41) darzustellen, und
- wobei sowohl für die erste Station (21) als auch für die zweite Station (41) jeweils gilt, dass der Abstandshalter zur beabstandeten Positionierung der Kamera bezüglich einer horizontalen oder pultartig geneigten Arbeitsfläche (37,57) derart ausgebildet ist, dass die Kamera die Arbeitsfläche erfasst und der Abstandshalter zu diesem Zweck eine Basis (27,47) zur Auflage auf oder zur Befestigung an der Arbeitsfläche (37,57) und eine mit der Basis (27,47) verbundene oder integral geformte Halterung zur Befestigung und/oder Aufnahme der Kamera aufweist, und
- wobei bei der ersten und zweiten Station (21, 41) die Kamera und das Display derart zueinander angeordnet sind, dass ein vom Display der Station angezeigtes Bild nicht von der Kamera derselben Station erfasst wird, und
- wobei bei der ersten und/oder zweiten Station (21, 41) das Display und die Kamera in einander entgegengesetzte Richtungen ausgerichtet sind und das Display und die Kamera fest miteinander verbunden und gemeinsam vom Abstandshalter entfernbar ausgebildet sind.

2. System nach Anspruch 1, wobei sowohl für die erste Station (21) als auch für die zweite Station jeweils gilt, dass die Kamera einen der Station (21, 41) zugeordneten Arbeitsraum erfasst, wobei der Arbeitsraum durch die Arbeitsfläche (37, 57) begrenzt ist.

3. System nach Anspruch 2, wobei sowohl für die erste als auch für die zweite Station jeweils gilt, dass das Display und der Arbeitsraum für den Benutzer gemeinsam einsehbar sind.

4. System nach einem der vorherigen Ansprüche, wobei bei der ersten und/oder zweiten Station die Kamera und das Display relativ zueinander beweglich ausrichtbar, insbesondere relativ zueinander schwenkbar, drehbar oder kippbar angeordnet sind.

5. System nach einem der vorherigen Ansprüche, bei der ersten und/oder zweiten Station (21,41) der Abstandshalter ein Tisch ist, wobei die Halterung eine (25) Tischplatte des Tisches ist und die Tischplatte eine Öffnung oder einen transparenten Bereich aufweist, wobei die Öffnung oder der transparente Bereich grösser als der Durchmesser einer Kameralinse der Kamera ist.

6. Verfahren für den Informationsaustausch, umfassend:
- Bereitstellen einer ersten Station (21) und einer zweiten Station (41), wobei die erste und die zweite Station (21,41) jeweils ein Display, eine Kamera, einen Abstandshalter und eine mit dem Display und der Kamera verbundene Kommunikationseinrichtung aufweisen,
wobei das Bereitstellen der ersten Station (21) und der zweiten Station (41) derart erfolgt, dass die Kamera der ersten Station (21) das vom Display der ersten Station (21) angezeigte zweite Bild nicht erfasst und/oder die Kamera der zweiten Station (41) das vom Display der zweiten Station (41) angezeigte erste Bild nicht erfasst,
wobei sowohl für die erste Station (21) als auch die auch für die zweite Station (41) jeweils gilt, dass der Abstandshalter die Kamera bezüglich einer horizontalen oder pultartig geneigten Arbeitsfläche (37,57) positioniert und der Abstandshalter zu diesem Zweck eine Basis (27,47) zur Auflage auf oder zur Befestigung an der Arbeitsfläche (37,57) und eine mit der Basis (27,47) verbundene oder integral geformte Halterung zur Befestigung und/oder Aufnahme der Kamera aufweist, und wobei bei der ersten und/oder zweiten Station (21, 41) das Display und die Kamera in einander entgegengesetzte Richtungen ausgerichtet sind und das Display und die Kamera fest miteinander verbunden und gemeinsam vom Abstandshalter entfernbar ausgebildet sind,
- Aufnehmen eines ersten Bildes durch die Kamera der ersten Station (21) sowie übermitteln des ersten Bildes an die zweite Station (41) und Anzeigen des ersten Bildes in einem ersten Anzeigebereich des Displays der zweiten Station (41),
- Aufnehmen eines zweiten Bildes durch die Kamera der zweiten Station (41) sowie Übermitteln des zweiten Bildes an die erste Station und Anzeigen des zweiten Bildes in einem ersten Anzeigebereich des Displays der ersten Station (21),
- Darstellen des ersten Bildes in einem zweiten Anzeigebereich des Displays der ersten Station (21) und Darstellen des zweiten Bildes in einem zweiten Anzeigebereich des Displays der zweiten Station.

7. Verfahren nach Anspruch 6, wobei das Aufnehmen, das Übermitteln und das Anzeigen des ersten und zweiten Bildes zumindest im Wesentlichen zeitgleich und in Echtzeit erfolgt.

8. Verfahren nach Anspruch 6 oder Anspruch 7, wobei das erste und zweite Bild jeweils ein kontinuierliches Videobild ist.

9. Verfahren nach einem der Ansprüche 6 bis 8, wobei die Kamera der ersten und der zweiten Station (21, 41) jeweils einen zugeordneten Arbeitsraum erfasst, wobei der Arbeitsraum durch die Arbeitsfläche (37, 57) begrenzt ist.

10. Verfahren nach Anspruch 9, das Verfahren umfassend:
- Positionieren und Manipulieren eines ersten Demonstrationsobjektes in dem der ersten Station zugeordneten Arbeitsraum und
- zeitgleiches und/oder zeitversetztes Positionieren und Manipulieren eines zweiten Demonstrationsobjektes im der zweiten Station zugeordneten Arbeitsraum.

11. Verwendung eines Systems nach einem der Ansprüche 1 bis 5 und/oder einem Verfahren nach einem der Ansprüche 6 bis 10 zum Fernunterricht.

## Claims

1. System (11) for information exchange, including a first and a second station (21, 41), wherein
- the first and the second stations (21, 41) each comprise a display, a camera, a spacer and a communication device connected to the display and the camera, and
- the two stations (21, 41) are configured to communicate a first image recorded by the camera of the first station (21) from the first station (21) to the second station (41) by means of the communication devices and to display said first image in a first display region of the display of the second station (41), and to communicate a second image recorded by the camera of the second station (41) from the second station (41) to the first station (21) by means of the communication devices and to display said second image in a first display region of the display of the first station (21), and
- wherein the two stations are furthermore configured to present the image recorded by the camera of the first station (21) in a second display region of the display of the first station (21) and to present the image recorded by the camera of the second station (41) in a second display region of the display of the second station (41), and
- wherein both for the first station (21) and for the second station (41) it holds true in each case that the spacer is configured to position the camera at a distance in relation to a work surface (37, 57), which is horizontal or inclined in a disc-like manner, in such a way that the camera captures the work surface, and for this purpose the spacer comprises a base (27, 47) for bearing on or for securing to the work surface (37, 57), and a mount for securing and/or receiving the camera, said mount being connected to the base (27, 47) or formed integrally therewith, and
- wherein in the case of the first and second stations (21, 41) the camera and the display are arranged relative to one another in such a way that an image displayed by the display of the station is not captured by the camera of the same station, and
- wherein in the case of the first and/or second station (21, 41) the display and the camera are oriented in mutually opposite directions, and the display and the camera are configured such that they are fixedly connected to one another and jointly removable from the spacer.

2. System according to Claim 1, wherein both for the first station (21) and for the second station it holds true in each case that the camera captures a workspace assigned to the station (21, 41), wherein the workspace is delimited by the work surface (37, 57).

3. System according to Claim 2, wherein both for the first station and for the second station it holds true in each case that the display and the workspace are jointly visible to the user.

4. System according to any of the preceding claims, wherein in the case of the first and/or second station the camera and the display are arranged such that they are orientable movably relative to one another, in particular pivotable, rotatable or tiltable relative to one another.

5. System according to any of the preceding claims, wherein in the case of the first and/or second station (21, 41) the spacer is a table, wherein the mount is a tabletop (25) of the table and the tabletop comprises an opening or a transparent region, wherein the opening or the transparent region is larger than the diameter of a camera lens of the camera.

6. Method for information exchange, including:
- providing a first station (21) and a second station (41), wherein the first and second stations (21, 41) each comprise a display, a camera, a spacer and a communication device connected to the display and the camera,
wherein providing the first station (21) and the second station (41) is effected in such a way that the camera of the first station (21) does not capture the second image displayed by the display of the first station (21) and/or the camera of the second station (41) does not capture the first image displayed by the display of the second station (41),
wherein both for the first station (21) and for the second station (41) it holds true in each case that the spacer positions the camera in relation to a work surface (37, 57), which is horizontal or inclined in a disc-like manner, and for this purpose the spacer comprises a base (27, 47) for bearing on or for securing to the work surface (37, 57), and a mount for securing and/or receiving the camera, said mount being connected to the base (27, 47) or formed integrally therewith, and wherein in the case of the first and/or second station (21, 41) the display and the camera are oriented in mutually opposite directions, and the display and the camera are configured such that they are fixedly connected to one another and jointly removable from the spacer,
- recording a first image by means of the camera of the first station (21) and communicating the first image to the second station (41) and displaying the first image in a first display region of the display of the second station (41),
- recording a second image by means of the camera of the second station (41) and communicating the second image to the first station and displaying the second image in a first display region of the display of the first station (21),
- presenting the first image in a second display region of the display of the first station (21) and presenting the second image in a second display region of the display of the second station.

7. Method according to Claim 6, wherein the processes of recording, communicating and displaying the first and second images are effected at least substantially simultaneously and in real time.

8. Method according to Claim 6 or Claim 7, wherein the first and second images are in each case a continuous video image.

9. Method according to any of Claims 6 to 8, wherein the camera of the first and second stations (21, 41) in each case captures an assigned workspace, wherein the workspace is delimited by the work surface (37, 57).

10. Method according to Claim 9, the method including:
- positioning and manipulating a first demonstration object in the workspace assigned to the first station, and
- simultaneous and/or time-staggered positioning and manipulating of a second demonstration object in the workspace assigned to the second station.

11. Use of a system according to any of Claims 1 to 5 and/or a method according to any of Claims 6 to 10 for distance learning.

## Revendications

1. Système permettant l'échange d'informations (11), comportant une première et une seconde station (21, 41), dans lequel
- la première et la seconde station (21, 41) comprennent respectivement un dispositif d'affichage, une caméra, un dispositif de maintien à distance et un dispositif de communication relié au dispositif d'affichage et à la caméra, et
- les deux stations (21, 41) sont conçues pour transmettre de la première station (21) à la seconde station (41) une première image prise par la caméra de la première station (21) au moyen des dispositifs de communication et pour l'afficher dans une première zone d'affichage du dispositif d'affichage de la seconde station (41) et pour transmettre de la seconde station (41) à la première station (21) une seconde image prise par la caméra de la seconde station (41) au moyen des dispositifs de communication et pour l'afficher dans une première zone d'affichage du dispositif d'affichage de la première station (21), et
- dans lequel les deux stations sont en outre conçues pour représenter l'image prise par la caméra de la première station (21) dans une seconde zone d'affichage du dispositif d'affichage de la première station (21) et pour représenter l'image prise par la caméra de la seconde station (41) dans une seconde zone d'affichage du dispositif d'affichage de la seconde station (41), et
- dans lequel, aussi bien pour la première station (21) que pour la seconde station (41), il est respectivement fait en sorte que le dispositif de maintien à distance soit conçu pour le positionnement à distance de la caméra par rapport à une surface de travail (37, 57) horizontale ou inclinée à la manière d'un bureau, de telle manière que la caméra détecte la surface de travail et, à cette fin, le dispositif de maintien à distance comporte une base (27, 47) destinée à être déposée ou fixée sur la surface de travail (37, 57) et un support relié à la base (27, 47) ou formé d'un seul tenant avec celle-ci pour la fixation et/ou le logement de la caméra, et
- dans lequel, au niveau des première et seconde stations (21, 41), la caméra et le dispositif d'affichage sont disposés l'un par rapport à l'autre de telle manière qu'une image affichée par le dispositif d'affichage de la station ne soit pas détectée par la caméra de la même station, et
- dans lequel, au niveau de la première et/ou de la seconde station (21, 41), le dispositif d'affichage et la caméra sont orientés dans des directions opposées l'une à l'autre et le dispositif d'affichage et la caméra sont reliés de manière fixe l'un à l'autre et sont conçus pour pouvoir être retirés conjointement du dispositif de maintien à distance.

2. Système selon la revendication 1, dans lequel, aussi bien pour la première station (21) que pour la seconde station, il est respectivement fait en sorte que la caméra détecte un espace de travail associé à la station (21, 41), dans lequel l'espace de travail est délimité par la surface de travail (37, 57).

3. Système selon la revendication 2, dans lequel, aussi bien pour la première station que pour la seconde station, il est respectivement fait en sorte que le dispositif d'affichage et l'espace de travail soient conjointement visibles par l'utilisateur.

4. Système selon l'une quelconque des revendications précédentes, dans lequel, au niveau de la première et/ou de la seconde station, la caméra et le dispositif d'affichage sont disposés de manière à pouvoir être orientés de manière mobile l'un par rapport à l'autre, en particulier à pouvoir pivoter, tourner ou s'incliner l'un par rapport à l'autre.

5. Système selon l'une quelconque des revendications précédentes, dans lequel, au niveau de la première et/ou de la seconde station (21, 41), le dispositif de maintien à distance est une table, dans lequel le support est un plateau de table (25) de la table et le plateau de table présente une ouverture ou une zone transparente, dans lequel l'ouverture ou la zone transparente est plus grande que le diamètre d'un objectif de caméra de la caméra.

6. Procédé permettant l'échange d'informations, comprenant :
- la fourniture d'une première station (21) et d'une seconde station (41), dans lequel la première et la seconde station (21, 41) comprennent respectivement un dispositif d'affichage, une caméra, un dispositif de maintien à distance et un dispositif de communication relié au dispositif d'affichage et à la caméra,
dans lequel la fourniture de la première station (21) et de la seconde station (41) est effectuée de telle manière que la caméra de la première station (21) ne détecte pas la seconde image affichée par le dispositif d'affichage de la première station (21) et/ou que la caméra de la seconde station (41) ne détecte pas la première image affichée par le dispositif d'affichage de la seconde station (41),
dans lequel, aussi bien pour la première station (21) que pour la seconde station (41), il est respectivement fait en sorte que le dispositif de maintien à distance positionne la caméra par rapport à une surface de travail (37, 57) horizontale ou inclinée à la manière d'un bureau et, à cette fin, le dispositif de maintien à distance comporte une base (27, 47) destinée à être déposée ou fixée sur la surface de travail (37, 57) et un support relié à la base (27, 47) ou formé d'un seul tenant avec celle-ci pour la fixation et/ou le logement de la caméra, et dans lequel, au niveau de la première et/ou de la seconde station (21, 41), le dispositif d'affichage et la caméra sont orientés dans des directions opposées l'une à l'autre et le dispositif d'affichage et la caméra sont reliés de manière fixe l'un à l'autre et peuvent être retirés conjointement du dispositif de maintien à distance,
- la prise d'une première image par la caméra de la première station (21) et la transmission de la première image à la seconde station (41) et l'affichage de la première image dans une première zone d'affichage du dispositif d'affichage de la seconde station (41),
- la prise d'une seconde image par la caméra de la seconde station (41) et la transmission de la seconde image à la première station et l'affichage de la seconde image dans une première zone d'affichage du dispositif d'affichage de la première station (21),
- la représentation de la première image dans une seconde zone d'affichage du dispositif d'affichage de la première station (21) et la représentation de la seconde image dans une seconde zone d'affichage du dispositif d'affichage de la seconde station.

7. Procédé selon la revendication 6, dans lequel la prise, la transmission et l'affichage des première et seconde images s'effectuent au moins sensiblement simultanément et en temps réel.

8. Procédé selon la revendication 6 ou la revendication 7, dans lequel les première et seconde images sont respectivement une image vidéo continue.

9. Procédé selon l'une quelconque des revendications 6 à 8, dans lequel la caméra des première et seconde stations (21, 41) détecte respectivement un espace de travail associé, dans lequel l'espace de travail est délimité par la surface de travail (37, 57).

10. Procédé selon la revendication 9, le procédé comprenant :
- le positionnement et la manipulation d'un premier objet de démonstration dans l'espace de travail associé à la première station et
- le positionnement et la manipulation simultanés et/ou décalés dans le temps d'un second objet de démonstration dans l'espace de travail associé à la seconde station.

11. Utilisation d'un système selon l'une quelconque des revendications 1 à 5 et/ou d'un procédé selon l'une quelconque des revendications 6 à 10 pour l'enseignement à distance.
